Europäisches Patentamt

European Patent Office

Office européen des brevets

(19)

(11) **EP 0 478 457 B1**

(12) **FASCICULE DE BREVET EUROPEEN**

(45) Date de publication et mention
de la délivrance du brevet:
**24.07.1996 Bulletin 1996/30**

(51) Int Cl.6: **H04N 5/33**, H04N 5/217,
H04N 3/15

(21) Numéro de dépôt: **91402569.7**

(22) Date de dépôt: **26.09.1991**

(54) **Détecteur d'images à l'état solide intégrant un filtre de bruit**

Festkörperbildabtaster mit einem integrierten Störschutzfilter

Solid state image sensor with an integrated noise filter

(84) Etats contractants désignés:
**DE FR GB IT NL**

(30) Priorité: **28.09.1990 FR 9012011**

(43) Date de publication de la demande:
**01.04.1992 Bulletin 1992/14**

(73) Titulaire: **COMMISSARIAT A L'ENERGIE ATOMIQUE**
**75015 Paris (FR)**

(72) Inventeurs:
• **Amingual, Daniel**
**F-38000 Grenoble (FR)**
• **Audaire, Luc**
**F-38000 Grenoble (FR)**
• **Rieux, Michel**
**F-75006 Paris (FR)**

(74) Mandataire: **Dubois-Chabert, Guy et al**
**Société de Protection des Inventions**
**25, rue de Ponthieu**
**75008 Paris (FR)**

(56) Documents cités:
EP-A- 0 138 398            GB-A- 2 147 172
US-A- 4 427 306            US-A- 4 734 583
US-A- 4 788 595

• TOUTE L'ELECTRONIQUE, no. 456,
août-septembre 1980, pages 33-38; M.
GIGNOUX: "Capture et poursuite d'un signal
périodique noyé dans le bruit à l'aide de filtres à
N-chemins"
• "The Random Access Memory Concept Applied
to the Infrared Focal Plane", L. Audaire et al.,
SPIE, Vol. 865, 1987, Pages 47 à 51
• "Status of SOFRADIR IR-CCD Detectors",
Tribolet et al., SPIE, Vol. 865, 1987, Pages 65 à 70

EP 0 478 457 B1

# Description

La présente invention a pour objet un dispositif pour prise de vues. Elle s'applique notamment aux caméras comprenant une matrice d'un grand nombre d'éléments détecteurs, pour prise de vues dans toutes les gammes de longueurs d'onde.

Les dispositifs de prise de vues possèdent une matrice d'éléments détecteurs dans leur plan focal. Les éléments détecteurs quels qu'ils soient convertissent un flux de photons incidents en un signal électrique. On sait que les éléments détecteurs associés à des circuits de lecture (amplificateurs et adaptateurs d'impédance) présentent un spectre de bruit qui est la somme de deux densités spectrales.

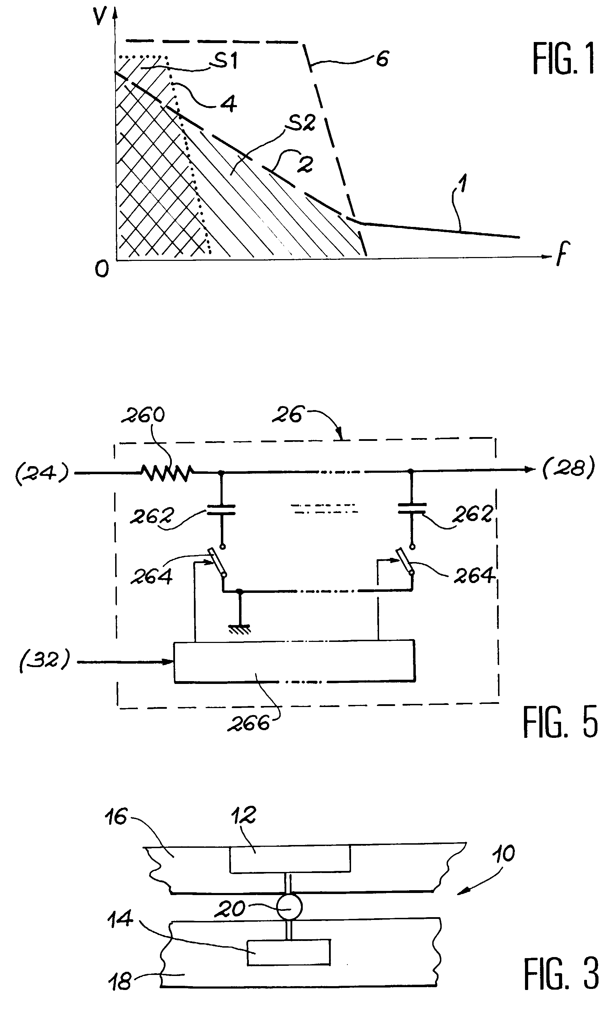

La figure 1 représente schématiquement un tel spectre de bruit en fonction de la fréquence. Ce dernier comprend une composante 1 (représentée en trait plein) dite de "bruit blanc" physiquement liée à la quantification du courant. Ce bruit est le bruit minimum de tout phénomène de conduction électrique.

Une autre composante 2 (représentée en trait mixte) dite "en 1/f" possède une énergie qui varie comme l'inverse de la fréquence jusqu'aux très basses fréquences. Cette composante est caractéristique de la technologie employée pour la prise de vues.

Usuellement, pour améliorer la sensibilité de la détection des signaux issus d'une matrice photosensible, on associe habituellement à chaque élément détecteur un circuit qui intègre, pendant le temps de la prise d'une vue, le signal correspondant à la détection.

On a aussi représenté (en pointillé) sur la figure 1, le spectre 4 du signal détecté par un élément détecteur et intégré pendant le temps de la prise d'une vue et la fonction de transfert 16 (en trait tireté) du circuit mis en oeuvre pour intégrer le signal provenant de chaque élément détecteur.

Ce type de dispositif de prise de vues présente de nombreux inconvénients majeurs.

En premier lieu, ils prennent en compte les courants dits "d'obscurité", signaux parasites continus provenant de l'élément détecteur et de son circuit de lecture. Ces courants, d'origine thermique, ne contiennent aucune information sur le flux de photons incident. On sait qu'ils croissent exponentiellement avec la température : au-delà d'une température critique, ces courants parasites deviennent plus intenses que les courants d'origine photonique.

Un autre inconvénient de ce type de dispositif connu provient de la présence d'un éclairement moyen correspondant à un éclairement de fond. La détection de ce dernier engendre un courant parasite qui peut être très intense, en particulier dans les applications d'imagerie infrarouge.

Les courants d'obscurité et le courant parasite provenant d'un éclairement moyen ne portent aucune information utile, mais ils participent à la rapide saturation des circuits d'intégration, ce qui rend la prise de vues peu sensible.

Le fait que sur une même matrice, tous les éléments détecteurs n'ont pas le même point de fonctionnement statique constitue un autre inconvénient des dispositifs connus. Cette dispersion usuellement appelée "bruit spatial fixe" apparaît directement dans le signal vidéo et doit être corrigée, ce qui complique le traitement de ce signal. Par ailleurs, les dispositifs de prise de vues connus intègrent la composante de bruit en 1/f des éléments détecteurs et des circuits de lecture (référence 2, figure 1). Le signal portant l'information à détecter est superposé à ces parasites (référence 4, figure 1). Le rapport signal/bruit est représenté par le rapport S1/S2 des surfaces hachurées limitées d'une part par la courbe référencée 4 et d'autre part par la courbe référencée 2 et limitée par la courbe référencée 6 (fonction de transfert du dispositif). On comprend au vu de la figure 1 que la prise en compte des signaux parasites de basses fréquences tend à diminue considérablement le rapport signal/bruit.

Un article intitulé "The Random "Access Memory" Concept Applied to the Infrared Focal-Plane" de L. Aulaire et al (SPIE, volume 865, 1987, pages 47 à 51) décrit un dispositif pour prise de vues comprenant plusieurs moyens de détection optoélectronique comportant un élément détecteur connecté à un circuit de lecture; des moyens de connexion pour relier chaque moyen de détection optoélectronique à un moyen de détection ; des moyens d'adressage des moyens de détection optoélectronique.

Une demande de brevet EP-A-0 138 398 décrit un dispositif pour prise de vues comprenant plusieurs moyens de détection optoélectroniques arrangés en matrice d'au moins une ligne et plusieurs colonnes, des moyens de modulation pour moduler le signal optique détecté.

Un brevet US-A-4 427 306 décrit un dispositif qui comprend des moyens de détection synchrone comportant un amplificateur, un filtre sélectif connecté par une entrée à une sortie de l'amplificateur, un circuit de détection connecté par une entrée à une sortie du filtre sélectif, un intégrateur connecté par une entrée à une sortie du circuit de détection.

Un brevet US-A-4 788 595 décrit un circuit pour commander un capteur image en lui appliquant une tension. Ce circuit comprend un circuit d'alimentation en tension pour fournir une tension de polarité positive ou négative au capteur image en fonction d'un signal de commande, un circuit de conversion pour convertir un photocourant de sortie du capteur image en une tension de détection, un circuit d'inversion pour inverser la tension de détection en fonction du signal de commande, et un circuit de commande pour générer le signal de commande. Le signal de commande a une période prédéterminée telle que le circuit d'alimentation en tension fournit alternativement les tensions de polarités positive et négative avec la période prédéterminée et le circuit d'inversion inverse la tension de détection seulement durant l'une des première et seconde moitiés de chaque période du signal de commande.

Un brevet US-A-4 734 583 décrit un circuit de sortie pour des dispositifs à injection de charge sensibles aux infrarouges, chaque dispositif comprenant un réseau à deux dimensions d'emplacement sensibles à double grille sur un substrat en InSb ou HgCdTe.

La présente invention a pout but de pallier les inconvénients des documents de l'art antérieur. Pour cela, elle préconise la connexion de chaque élément détecteur une détection synchrone, l'ensemble des détections synchrones étant intégré dans le même substrat que les circuits de lecture.

L'usage d'une détection synchrone associée à chaque élément détecteur permet d'éliminer la composante continue du signal de mesure. Elle permet aussi de s'affranchir de la dispersion des points de fonctionnement des différents éléments détecteurs.

Grâce l'usage d'une détection synchrone de fréquence de modulation suffisamment élevée, la mesure est effectuée dans une zone où le bruit en 1/f est quasi nul. Le rapport signal/bruit en est ainsi fortement amélioré.

Les détections synchrones intégrées dans le même substrat que les circuits de lecture sont placées dans le plan focal d'une caméra. Il ne se pose ainsi aucun problème d'encombrement.

D'une manière plus précise, la présente invention concerne un dispositif pour prise de vues comprenant :

plusieurs moyens de détection optoélectroniques arrangés en matrice d'au moins une ligne et plusieurs colonnes, chaque moyen de détection optoélectronique comportant un élément détecteur connecté à un circuit de lecture, des moyens de connexion pour relier chaque moyen de détection optoélectronique à un moyen de détection synchrone, des moyens d'adressage des moyens de détection optoélectronique, des moyens de synchronisation aptes à synchroniser la détection synchrone,

caractérisé en ce qu'il comprend

des moyens de modulation pour moduler les moyens de détection optoélectronique à une fréquence de modulation, plusieurs moyens de détection synchrone à la fréquence de modulation, et en ce que les moyens de synchronisation appliquent un signal de synchronisation aux moyens de détection afin de moduler la détection, et en ce que Chaque moyen de détection synchrone comporte : un amplificateur réalisant une liaison ne transmettant que les signaux variables dans le temps, un filtre sélectif connecté par une entrée à une sortie de l'amplificateur, le filtre sélectif ayant une fréquence centrale calée sur la fréquence de modulation, un circuit de détection crête à crête connecté par une entrée à une sortie du filtre sélectif, un intégrateur connecté par une entrée à une sortie du circuit de détection crête à crête.

Au moins les circuits de lecture, les moyens de détection synchrone, les moyens de connexion, les moyens d'adressage, les moyens de synchronisation sont intégrés sur un même substrat.

La fabrication d'un tel dispositif fait donc appel aux technologies bien dominées de la microélectronique. Les connexions par fil ou autre avec l'extérieur sont réduites, facilitant la mise en place du dispositif dans une caméra.

Dans une matrice d'éléments détecteurs réalisée par la technique d'hybridation, chaque circuit de lecture est positionné sous un élément détecteur. Si l'encombrement d'un élément détecteur le permet, le moyen de détection synchrone correspondant est positionné à proximité du circuit de lecture sous l'élément détecteur. Dans le cas contraire, le moyen de détection synchrone est placé hors de la zone du substrat occupée par les circuits de lecture.

Selon un mode de réalisation avantageux permettant de réduire le nombre de moyens de détection synchrone utilisés, les moyens de détection d'une colonne de la matrice sont reliés à un même moyen de détection synchrone.

Cette disposition permet aussi de réduire le nombre de moyens de connexion nécessaires et de simplifier ainsi la fabrication du dispositif. Il s'agit ici de connexions intégrées dans le substrat et la réduction de leur nombre résout les problèmes de croisement entre plusieurs connexions.

De manière avantageuse, le filtre sélectif est du type "filtre à N chemins". Ce type de filtre peut être réalisé à l'aide de composants MOS (semiconducteur à grille isolée par du dioxyde de silicium ($SiO_2$)) qui permettent son intégration sur le substrat par les techniques de microélectroniques usuelles.

De manière avantageuse, le circuit de détection "crête à crête" est un double échantillonneur corrélé.

Selon une variante de réalisation du dispositif, ce dernier comprend en outre un multiplexeur connecté à des sorties des moyens de détection synchrone.

Le multiplexeur permet de délivrer les signaux provenant des moyens de détection synchrone aux circuits de traitement usuels d'une caméra de prise de vues.

Avantageusement, le multiplexeur est intégré sur ledit substrat.

Selon une variante de réalisation du dispositif, les moyens de modulation comportent un écran à cristal liquide connecté aux moyens de synchronisation.

L'écran à cristal liquide placé devant la matrice d'éléments détecteurs passe d'un état opaque à un état transparent, ce qui entraîne une modulation du flux de photons détectés. Un tel écran peut être commuté efficacement à une fréquence élevée, de l'ordre de 100 kHz.

L'invention peut s'appliquer à toutes sortes d'éléments détecteurs fonctionnant dans toutes les gammes de longueurs d'onde.

Les éléments détecteurs peuvent être des photodiodes. Pour la détection dans l'infrarouge par exemple, l'amélioration du rapport signal/bruit permet d'utiliser des photodiodes en HgCdTe à une température avoisinant 200 K obtenue par des refroidisseurs à effet PELTIER alors qu'usuellement, ces diodes fonctionnent à la température de l'azote liquide (77 K). Ainsi, grâce à l'invention, la mise en oeuvre des photodiodes en HgCdTe est beaucoup plus simple. Elle ne nécessite que peu de maintenance, et l'alimentation continuelle en azote liquide est supprimée.

Les éléments détecteurs peuvent aussi être des éléments photoconducteurs. Dans ce cas encore, un fonctionnement à basse température n'est plus nécessaire.

Les éléments détecteurs peuvent aussi être des condensateurs de capacité variable en fonction de la température. On réalise alors une matrice de capacimètres qui permet une prise de vues à température ambiante.

De manière avantageuse, chaque élément détecteur est connecté à un circuit de lecture associé par une soudure à l'indium.

Cette technique dite "d'hybridation" permet de connecter des éléments réalisés dans des technologies très différentes : les circuits intégrés dans le substrat aux éléments détecteurs.

Les caractéristiques et avantages de l'invention apparaîtront mieux après la description qui suit donnée à titre explicatif et nullement limitatif. Cette description se réfère à des dessins annexés sur lesquels :

- la figure 1, déjà décrite, représente schématiquement les spectres de bruit dans le cas d'une prise de vues conforme à l'art antérieur,
- la figure 2 représente schématiquement un dispositif conforme à l'invention,
- la figure 3 représente schématiquement une vue en coupe d'un moyen de détection utilisé dans un dispositif conforme à l'invention,
- la figure 4 représente schématiquement un amplificateur utilisé dans un dispositif conforme à l'invention,
- la figure 5 représente schématiquement un filtre à N chemins,
- la figure 6 représente schématiquement un double échantillonneur corrélé,
- les figures 7A, 7B, 7C, 7D représentent schématiquement, respectivement un signal modulé appliqué en entrée du double échantillonneur corrélé, deux chronogrammes des impulsions de commande appliquées sur le double échantillonneur corrélé et le signal délivré en sortie du double échantillonneur corrélé,
- la figure 8 représente schématiquement un premier moyen de détection à élément photoconducteur,
- la figure 9 représente schématiquement un second moyen de détection à condensateur à capacité variable.

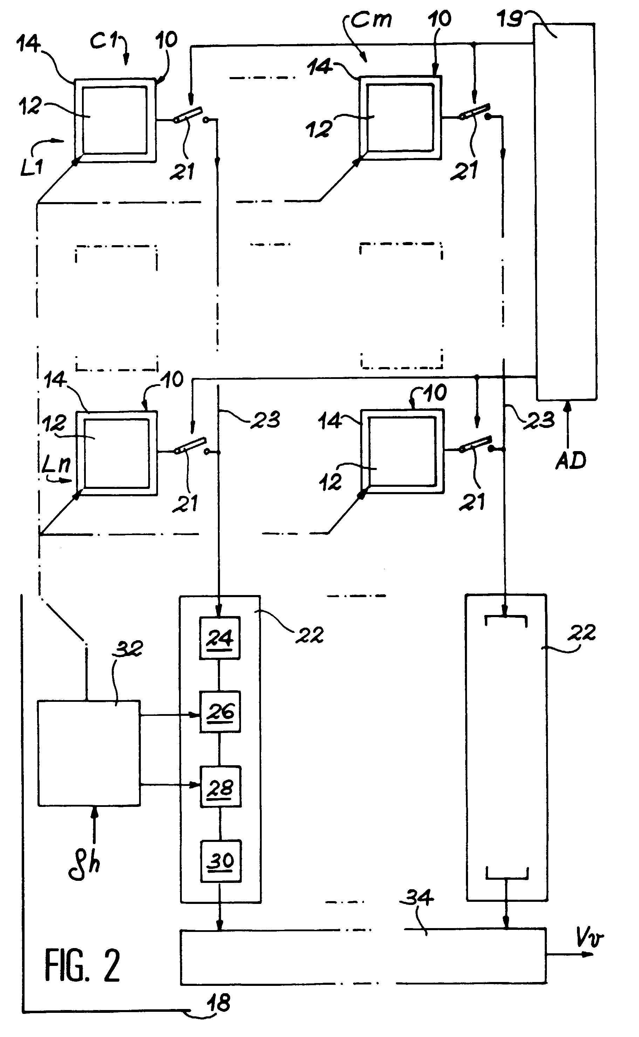

On voit sur la figure 2, représenté schématiquement, un dispositif conforme à l'invention. Des moyens de détection optoélectronique 10 sont arrangés en matrice dont les lignes sont référencées L1 à Ln où n est par exemple égal à 256 et les colonnes sont référencées C1 à Cm où m est égal par exemple à 256.

Chaque moyen de détection optoélectronique 10 comprend un élément détecteur 12 connecté à un circuit de lecture 14. Le circuit de lecture 14 intègre pendant le temps d'une prise de vues le courant délivré par l'élément détecteur 12. Il réalise d'autre part une adaptation d'impédance pour autoriser la lecture sans dégradation du signal intégré.

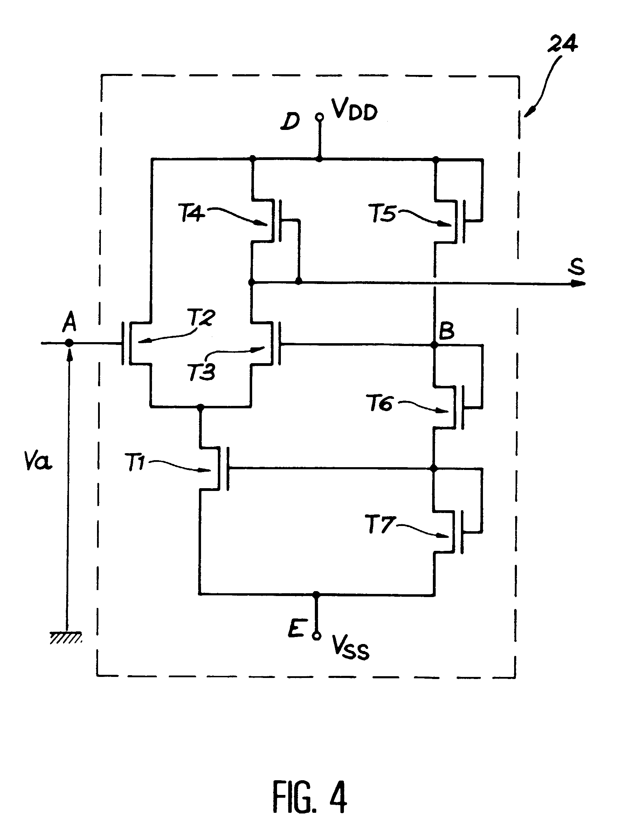

On peut voir sur la figure 3 un mode de réalisation avantageux de la connexion entre l'élément détecteur 12 et le circuit de lecture 14.

Les éléments détecteurs 12 sont arrangés en matrice. Ils sont réalisés sur un premier substrat 16. Les circuits de lecture 14 associés sont arrangés en une matrice correspondante et sont réalises sur un second substrat 18. La connexion entre un élément détecteur 12 et un circuit de lecture 14 est obtenue par écrasement d'une bille d'indium 20 entre les deux substrats 16 et 18. Cette technique de réalisation d'une matrice de moyens de détection 10 est décrite en détails dans le document Status of SOFRADIR IR-CCD Detectors - SPIE vol.865 (1987) p.65-70.

Dans cette disposition, le circuit de lecture 14 est logé sous l'élément détecteur 12, c'est-à-dire que sa surface ne dépasse pas 30 microns x 30 microns environ.

La détection du flux de photons incidents par les moyens de détection 10 est modulée à une fréquence de modulation fm par exemple égale à 100 kHz. Cette modulation peut être obtenue par différents moyens qui seront détaillés plus loin. Sur la figure 2, on voit que des moyens de synchronisation 32 sont alimentés par un signal d'horloge de fréquence d'horloge fh délivré par une horloge (non représentée). fh peut être égale à 1 MHz.

Dans l'exemple de réalisation représenté figure 2, les moyens de synchronisation 32 délivrent des signaux de modulation appliqués sur des entrées des éléments de détection 12. Comme on le verra plus loin, les moyens de synchronisation 32 délivrent sur des sorties des signaux de commande et d'horloge qui permettent d'assurer le synchronisme du fonctionnement de divers composants du dispositif.

Toujours sur la figure 2, on voit que le dispositif comprend des moyens d'adressage 19 intégrés dans le même substrat 18 que les circuits de lecture. La matrice de moyens de détection est adressée ligne après ligne. Les moyens d'adressage 19 sont composés d'un registre pour le décodage d'un signal d'adresse AD appliqué sur une entrée. Le registre possède autant de sorties que la matrice comporte de lignes. Sur chaque sortie, à tour de rôle et en fonction du signal d'adresse AD, un signal de commande est délivré.

De tels moyens d'adressage sont par exemple du type de ceux utilisés dans les circuits de mémoire vive. On en trouve une description dans le document "The "Random access memory" concept applied to the infrared focal plane" - L.Audaire et al. - SPIE vol.865 (1987) p.47-51.

Chaque circuit de lecture 14 est connecté en sortie à un interrupteur 21 intégré dans le substrat 18. Les interrupteurs 21 peuvent être réalisés par des transistors TMOS par exemple. La fermeture des interrupteurs 21 associés à une ligne de circuits de lecture 14 est commandée par un signal de commande délivré sur une sortie de moyens d'adressage 19.

La fermeture d'un interrupteur 21 relie un circuit de lecture 14 à un bus interne 23 intégré dans le substrat 18.

Les interrupteurs 21 et les bus internes 23 forment des moyens de connexion qui relient chaque colonne de circuits de lecture 14 à un moyen de détection synchrone 22 intégré dans le substrat 18.

Les moyens de détection synchrone 22 sont réalisés avec des composants MOS de manière à être facilement intégrés dans le substrat 18.

Chaque moyen de détection synchrone 22 comprend un amplificateur 24 réalisant une liaison alternative : l'amplificateur filtre les composantes continues du signal qu'il amplifie. Un exemple d'un tel amplificateur est représenté schématiquement sur la figure 4. Le transistor T1 constitue un générateur de courant qui est divisé par l'action des transistors T2 et T3 en fonction de la différence entre la tension d'entrée Va appliquée au point A et la tension appliquée au point B.

T1 constitue une résistance qui mesure le courant circulant dans le transistor T5.

T5, T6, T7 constituent un pont diviseur de tension entre les tensions VDD appliquée au point D et VSS appliquée au point E. VDD et VSS sont fournies par des alimentations non représentées. On réalise ainsi la polarisation des grilles des transistors T3 et T1.

La tension de sortie S est l'image de la tension d'entrée Va moins la tension de référence Vb appliquée en B et amplifiée par les transistors T3 et T4.

A nouveau sur la figure 2, on voit qu'un filtre sélectif 26 est connecté à une sortie de l'amplificateur 24. Le filtre sélectif est centré sur la fréquence fm de modulation de la détection.

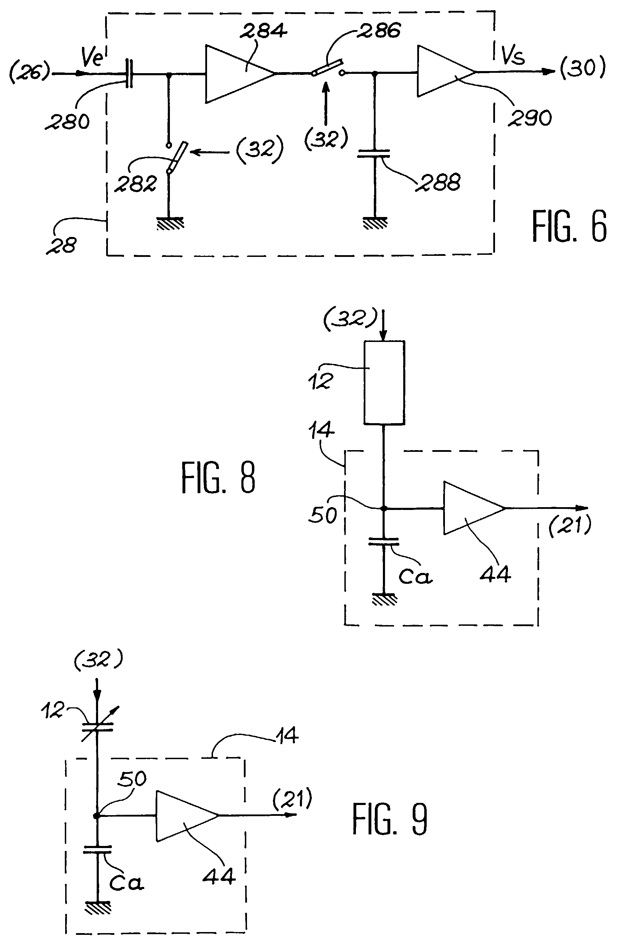

La figure 5 représente schématiquement un mode de réalisation avantageux du filtre sélectif. Le filtre représenté est communément appelé "filtre à N chemins". Un tel filtre est décrit dans le document "Capture automatique, poursuite et reconnaissance de la forme d'un signal périodique très largement variable en fréquence et noyé dans le bruit" M.GIGNOUX, septième colloque sur le traitement du signal et des applications, NICE 1979. Comme on va le voir, il ne comprend que des composants facilement réalisables en technologie MOS. Il est constitué d'une résistance d'entrée 260 connectée à N condensateurs 262 identiques. Chaque condensateur 262 est connecté par une de ses bornes à un interrupteur 264 par exemple réalisé par un transistor MOS. Lorsqu'un interrupteur 264 est fermé, le condensateur 262 associé est relié à la masse.

Un registre à décalage 266 commande la fermeture successive des interrupteurs 264 à la fréquence d'horloge fh qui est égale à N fois la fréquence fm de modulation de la détection. Cette fréquence d'horloge est fournie par les moyens de synchronisation 32. Les condensateurs 262 jouent le rôle de mémoire échantillonnant le signal délivré par l'amplificateur 24.

Sous l'action du registre à décalage 266, les interrupteurs 264 sont fermés cycliquement à la fréquence de modulation fm (égale à fh/N). Ainsi, comme les moyens de synchronisation 32 sont tels que la commande des interrupteurs 264 est synchrone avec la modulation de la détection, les composantes du signal d'entrée à une fréquence différente de fh x N (c'est-à-dire fm) sont filtrées.

En fait, on sait que la réponse en fréquence d'un tel filtre est constituée d'un spectre de raies centrées autour des harmoniques de la fréquence de modulation fm. Chacune des raies possède une bande passante égale à 1/2 pi NRC (demi-largeur à mi-hauteur de la raie) où pi est le nombre bien connu, représentant le rapport constant d'une circonférence d'un cercle à son diamètre (3,14 ...), N est le nombre de condensateurs 262 du filtre, N peut être égal à 10 (pour fh = 1 Mhz et fm = 100 kHz), C est la capacité des condensateurs 262, R est la valeur de la résistance d'entrée 260.

La constante de temps d'établissement d'un tel filtre est de l'ordre de NRC.

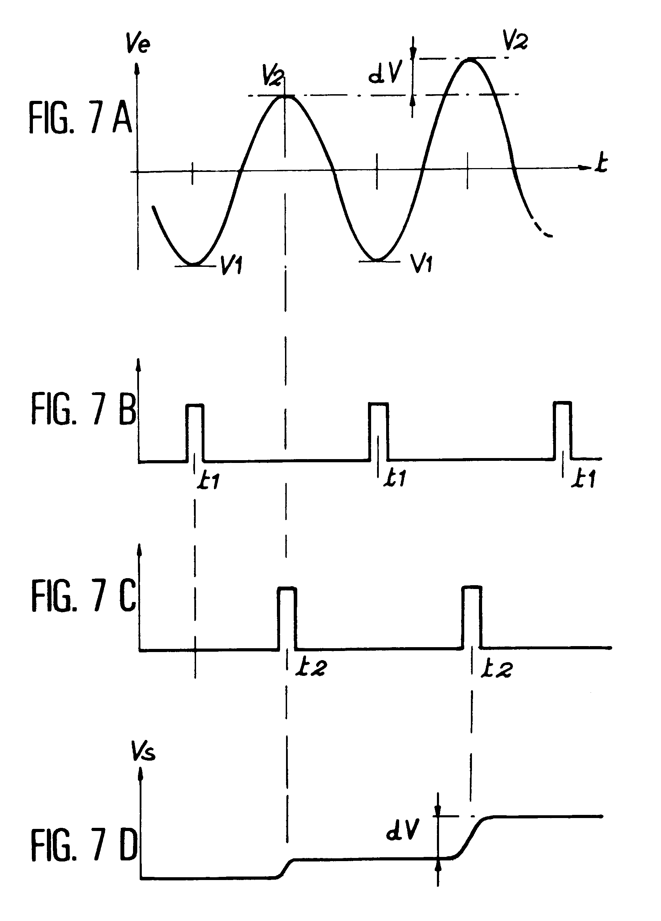

Sur la figure 2, on voit que la sortie du filtre sélectif 26 est connectée à l'entrée d'un circuit de détection "crête à crête" 28. Un mode de réalisation d'un tel circuit est maintenant décrit en référence aux figures 6, 7A, 7B, 7C et 7D. Le circuit représenté sur la figure 6 est communément désigné sous le terme "double échantillonneur corrélé". Il comprend une liaison alternative formée d'un premier condensateur 280 connecté à un interrupteur 282 par exemple réalisé par un transistor MOS. Lorsque l'interrupteur 282 est fermé, une borne du condensateur 280 est portée à la masse. La fermeture de l'interrupteur 282 est commandée par un signal de commande délivré par les moyens de synchronisation 32.

La liaison alternative est reliée à un amplificateur 284 à haute impédance d'entrée. La sortie de cet amplificateur 284 est reliée à un interrupteur 286 réalisé par exemple par un transistor MOS. La fermeture de cet interrupteur 286 est commandée par un signal de commande délivré par les moyens de synchronisation 32.

Une borne d'un condensateur 288 est connectée à l'interrupteur 286 alors que son autre borne est portée à la masse. Un amplificateur 290 à haute impédance d'entrée est aussi connecté à l'interrupteur 286. Il délivre en sortie le signal de sortie Vs démodulé.

La figure 7A représente un signal Ve appliqué à l'entrée du double échantillonneur corrélé. Ce signal Ve de fréquence fm comporte des variations d'amplitude dV représentatives des variations d'éclairement détectées par les moyens de détection reliés au moyen de détection synchrone. Ve comporte des minima V1 et des maxima V2.

La figure 7B représente schématiquement les commandes de fermeture de l'interrupteur 282. Les fermetures interviennent à des instants t1 en phase avec l'apparition des minima V1.

La figure 7C représente schématiquement les commandes de fermeture de l'interrupteur 286. Les fermetures interviennent à des instants t2 en phase avec l'apparition des maxima V2.

Après une fermeture de l'interrupteur 282, le condensateur 280 est chargé à la valeur V1.

A un instant t2, lorsque l'interrupteur 286 est fermé, le condensateur 288 se charge à la valeur V2 - V1.

A chaque période, en synchronisme avec la fréquence de modulation fm, la sortie de l'amplificateur référencée 290, délivre un signal de sortie Vs (figure 7D) proportionnel aux variations dV du signal d'entrée Ve.

A nouveau en référence à la figure 2, on voit que la sortie du double échantillonneur corrélé 28 est reliée à un circuit intégrateur 30 qui effectue un lissage du signal Vs.

A chaque adressage d'une ligne de moyens de détection 10, les moyens de détection synchrone 22 délivrent un signal sur des sorties reliées à des entrées d'un multiplexeur 34 intégré dans le substrat 18. Ce multiplexeur à une structure identique à celle de l'adressage de lignes déjà décrite. Il fonctionne à la fréquence de scrutation des points élémentaires alors que l'adressage ligne fonctionne à la fréquence de scrutation des lignes.

Le multiplexeur délivre un signal vidéo Vv sur une sortie. Ce signal est apte à être traité par la caméra de prise de vues (par exemple, enregistrement sur un support, etc...).

Comme on l'a vu précédemment, c'est grâce à la modulation de la détection et à un filtrage des fréquences continues lors de la démodulation que le rapport signal/bruit est amélioré.

La description qui suit concerne trois types de moyens de détection utilisables dans un dispositif conforme à l'invention ; on décrit aussi, pour chaque type, les moyens de modulation mis en oeuvre.

La description qui va suivre à propos des figures 8 et 9, concerne un mode de réalisation de l'ensemble modulation-détection présentant une caractéristique tout particulièrement intéressante.

Effectivement, selon ce mode de réalisation, détaillé à partir des deux exemples représentés sur les figures 8 et 9, on exploite le comportement non linéaire des détecteurs pour réaliser la modulation. Or, il est généralement d'usage de chercher à corriger les effets parasites entraînés par le comportement non linéaire des détecteurs plutôt que d'exploiter cette caractéristique.

Sur la figure 8, on a représenté un moyen de détection utilisés usuellement à basse température et qui peut fonctionner à des températures avoisinant 200 K dans un dispositif conforme à l'invention.

Dans cet exemple de réalisation, l'élément détecteur 12 est un élément photoconducteur dont la conductivité électrique est modifiée par le flux de photons incidents.

A flux de photons incidents donné, on sait que la conductivité dépend de la polarisation du photoconducteur. Conformément à l'invention, la modulation de la détection est obtenue grâce à la modulation de la polarisation : pour cela, le photoconducteur est directement connecté aux moyens de synchronisation 32 qui délivrent 'un signal de polarisation modulé à la fréquence fm. La connexion 50 est par exemple réalisée grâce à une soudure par bille d'indium.

Comme la conductance, G, du détecteur 12 est proportionnelle au produit du signal d'entrée qui est le nombre de photons -n(t)- détectés en fonction du temps et de la tension de polarisation -$\sin(2*pi*fm*t)$- appliquée entre l'entrée 32 et le noeud 50 aux bornes du détecteur l'on a :

$$G = K * n(t) * \sin(2*pi*fm*t),$$

le moyen de modulation est donc le détecteur 12 lui-même auquel l'on associe le condensateur Ca pour former un pont diviseur d'impédance. La commande de modulation est le signal électrique appliqué à l'entrée 32 du détecteur.

Pour le signal de commande de modulation la conductance et le condensateur Ca constituent un pont diviseur d'impédance. L'amplitude et la phase du signal au noeud 50 sont modulés par le signal d'entrée n(t). Ces variations sont mesurées par la démodulation sychrone avec tous les avantages liés à l'invention.

Le circuit de lecture 14 est composé d'un condensateur Ca relié par une borne à un amplificateur 44 et par une autre borne à la masse.

Sur la figure 9, on a représenté un autre type de moyens de détection. L'élément détecteur est constitué par un condensateur 12 dont la capacité est fonction de la température, donc du flux de photons incidents (l'énergie lumineuse étant convertie en énergie thermique).

Une borne du condensateur à capacité variable est reliée aux moyens de synchronisation 32 qui délivrent un signal de polarisation de fréquence fm. La connexion 50 est par exemple réalisée par une bille d'indium.

L'autre borne de ce condensateur est connecté au circuit de lecture 14. Celui-ci effectue une mesure de la capacité variable. Il comporte un condensateur Ca à capacité fixe et connue connectée à un amplificateur 44.

Les condensateurs sont connectés entre eux et la tension alternative au point de connexion est fonction du rapport capacitif. Cette tension est modulée en amplitude par les variations de température dues au flux photonique.

Il est connu que les diélectriques ferroélectriques (par exemple le Polyvinil difluoré) ont une permittivité que varie fortement autour de certaines températures critiques de fonctionnement (en particulier la température de Curie). Le condensateur 12 constitué à partir d'un de ces corps est maintenu à une température moyenne voisine de cette température critique, par un moyen connu non représenté sur la figure. L'absorption de l'énergie des photons fait varier sa température autour de la température moyenne donc fait varier sa capacité autour d'une capacité moyenne.

Le détecteur 12 et le condensateur Ca constituent un pont diviseur d'impédance pour un signal 32 appliqué sur 12. Le signal au noeud 50 variera en amplitude en fonction du nombre de photons absorbés par le détecteur 12.

Ces variations sont mesurées par la démodulation sychrone avec tous les avantages liés à l'invention.

Le moyen de modulation est donc le détecteur 12 lui-même avec Ca. La commande de modulation est le signal électrique appliqué à l'entrée 32 du détecteur.

Un dispositif de prise de vues conforme à l'invention peut être réalisé par toutes les techniques d'intégration. L'intégration permet de placer dans le plan focal d'une caméra un système qui n'est sensible qu'à un signal modulé, éliminant ainsi tous les signaux parasites dus à des composantes continues. De plus, en choisissant une fréquence de modulation suffisamment élevée, on ne prend plus en compte la composante parasite en 1/f.

Un autre avantage du dispositif conforme à l'invention résulte de l'insensibilité du dispositif aux dispersions des points de fonctionnement des éléments détecteurs ainsi qu'aux variations dues à des facteurs autres que le flux de photons incidents.

L'invention ne se limite nullement aux exemples de réalisation plus spécialement décrits et représentés ; elle en admet au contraire toutes les variantes.

En particulier, si aucune contrainte ne restreint le nombre de colonnes, le nombre de lignes quant à lui est limité par le temps d'établissement du filtre sélectif. Afin d'augmenter le nombre de lignes, on peut disposer côte-à-côte, tête bêche, deux dispositifs identiques et intégrés dans le même substrat (mis à part les éléments détecteurs qui sont réalisés sur un substrat séparé).

**Revendications**

1. Dispositif pour prise de vues, comprenant;

   plusieurs moyens de détection optoélectroniques (10) arrangés en matrice d'au moins une ligne et plusieurs colonnes, chaque moyen de détection optoélectronique (10) comportant un élément détecteur (12) connecté à un circuit de lecture (14),
   des moyens de connexion (21, 23) pour relier chaque moyen de détection optoélectronique à un moyen de détection synchrone (22),
   des moyens d'adressage (15) des moyens de détection optoélectronique (10),
   des moyens de synchronisation (32) aptes à synchroniser la détection synchrone;

   caractérisé en ce qu'il comprend:

   des moyens de modulation pour moduler la détection optoélectronique (10) à une fréquence de modulation (fm),
   plusieurs moyens de détection synchrone (22) à la fréquence de modulation (fm),
   et en ce que les moyens de synchronisation appliquent un signal de synchronisation aux moyens de détection afin de moduler la détection

   et en ce que chaque moyen de détection synchrone (22) comporte :

   un amplificateur (24) réalisant une liaison ne transmettant que les signaux variables dans le temps un filtre sélectif (26) connecté par une entrée à une sortie de l'amplificateur (24), le filtre sélectif (26) ayant une fréquence centrale calée sur la fréquence de modulation (fm),
   un circuit de détection crête à crête (28) connecté par une entrée à une sortie du filtre sélectif (26),
   un intégrateur (30) connecté par une entrée à une sortie du circuit de détection crête à crête (28).

2. Dispositif selon la revendication 1, caractérisé en ce que les moyens de détection (10) d'une colonne de la matrice sont reliés à un même moyen de détection synchrone (22).

3. Dispositif selon la revendication 1, caractérisé en ce que le filtre sélectif (26) est du type "filtre à N chemins".

4. Dispositif selon la revendication 1, caractérisé en ce que le circuit de détection "crête à crête" (28) est un double échantillonneur corrélé.

5. Dispositif selon l'une quelconque des revendications 1 à 4, caractérisé en ce qu'il comprend en outre un multiplexeur (34) connecté à des sorties des moyens de détection synchrone (22).

6. Dispositif selon la revendication 5, caractérisé en ce que le multiplexeur (34) est intégré sur un substrat (18).

7. Dispositif selon l'une quelconque des revendications 1 a 6, caractérisé en ce que les moyens de modulation comportent un écran à cristal liquide (42) connecté aux moyens de synchronisation (32).

8. Dispositif selon l'une quelconque des revendications 1 à 7, caractérisé en ce que les éléments détecteurs (12) sont des photodiodes.

9. Dispositif selon l'une quelconque des revendications 1 à 6, caractérisé en ce que les moyens de modulation sont réalisés par un pont diviseur formé par les moyens de détection (12) et un élément d'impédance (Z).

10. Dispositif selon la revendication 9, caractérisé en ce que les moyens de détection (12) sont constitués d'un élément photoconducteur et l'élément d'impédance (Z), d'un condensateur (Ca).

11. Dispositif selon la revendication 9, caractérisé en ce que les moyens de détection (12) sont constitués d'un condensateur de capacité variable en fonction de la température et l'élément d'impédance (2), d'un condensateur (Ca) de capacite fixe,

12. Dispositif selon l'une quelconque des revendications 1 à 11, caractérisé en ce que chaque élément détecteur (12) est connecté à un circuit de lecture associé par une soudure à l'indium (20).

13. Dispositif selon l'une quelconque des revendications précédentes, caractérisé qu'au moins les circuits de lecture (14), les moyens de détection synchrone (22), les moyens de connexion (21, 23), les moyens d'adressage (19) et les moyens de synchronisation (32) sont intégrés sur un même substrat.

**Patentansprüche**

1. Abtastvorrichtung, umfassend:

mehrere optoelektronische Detektionseinrichtungen (10), angeordnet zu einer Matrix mit wenigstens einer Zeile und mehreren Spalten, wobei jede optoelektronische Detektionseinrichtung (10) ein Detektionselement (12) umfaßt, verbunden mit einem Leseschaltkreis (14), Verbindungseinrichtungen (21, 23), um jede optoelektronische Detektionseinrichtung mit einer Synchrondetektionseinrichtung (22) zu verbinden,

Adressiereinrichtungen (15) der optoelektronischen Detektionseinrichtungen (10), Synchronisationseinrichtungen (32), fähig die Synchrondetektion zu synchronisieren,

**dadurch gekennzeichnet**, daß sie umfaßt:

Modulationseinrichtungen zum Modulieren der optoelektronischen Detektion (10) mit einer Modulationsfrequenz (fm), mehrere Synchrondetektionseinrichtungen (22) mit der Modulationsfrequenz (fm), und dadurch, daß die Synchronisationseinrichtungen ein Synchronisationssignal an die Detektionseinrichtungen legen, um die Detektion zu modulieren, und dadurch, daß jede Synchrondetektionseinrichtung (22) umfaßt: einen Verstärker (24), der eine Verbindung herstellt, die nur die zeitlich veränderlichen Signale überträgt, ein selektives Filter (26), mit einem Eingang verbunden mit einem Ausgang des Verstärkers (24), wobei das selektive Filter (26) eine auf die Modulationsfrequenz (fm) abgestimmte bzw. synchronisierte mittlere Frequenz hat, einen Spitze-Spitze-Detektionsschaltkreis (28), durch einen Eingang mit einem Ausgang des selektiven Filters (26) verbunden, einen Integrator (30), durch einen Eingang mit einem Ausgang des Spitze-Spitze-Detektionsschaltkreises (28) verbunden.

2. Vorrichtung nach Anspruch 1, dadurch gekennzeichnet, daß die Detektionseinrichtungen (10) einer Spalte der Matrix verbunden sind mit ein und derselben Synchrondetektionseinrichtung (22).

3. Vorrichtung nach Anspruch 1, dadurch gekennzeichnet, daß das Selektivfilter (26) vom Typ "N-Wege-Filter" ist.

4. Vorrichtung nach Anspruch 1, dadurch gekennzeichnet, daß die "Spitze-Spitze"-Detektionsschaltung (28) eine korrelierte Doppelabtastschaltung ist.

5. Vorrichtung nach einem der Ansprüche 1 bis 4, dadurch gekennzeichnet, daß sie außerdem einen Multiplexer (34) umfaßt, verbunden mit Ausgängen der Synchrondetektionseinrichtungen (22).

6. Vorrichtung nach Anspruch 5, dadurch gekennzeichnet, daß der Multiplexer (34) auf einem Substrat integriert ist.

7. Vorrichtung nach einem der Ansprüche 1 bis 6, dadurch gekennzeichnet, daß die Modulationseinrichtungen einen Flüssigkristallschirm (42) umfassen, verbunden mit den Synchronisationseinrichtungen (32).

8.  Vorrichtung nach einem der Ansprüche 1 bis 7, dadurch gekennzeichnet, daß die Detektionselemente (12) Photodioden sind.

9.  Vorrichtung nach einem der Ansprüche 1 bis 6, dadurch gekennzeichnet, daß die Modulationseinrichtungen realisiert werden durch eine Teilerbrücke, gebildet durch die Detektionseinrichtungen (12) und ein Impedanzelement (Z).

10. Vorrichtung nach Anspruch 9, dadurch gekennzeichnet, daß die Detektionseinrichtungen (12) gebildet werden durch ein Photoleiterelement und das Impedanzelement (Z), einen Kondensators (Ca).

11. Vorrichtung nach Anspruch 9, dadurch gekennzeichnet, daß die Detektionseinrichtungen (12) gebildet werden durch einen Kondensator variabler Kapazität in Abhängigkeit von der Temperatur und dem Impedanzelement (Z), einen Kondensator (Ca) feststehender Kapazität.

12. Vorrichtung nach einem der Ansprüche 1 bis 11, dadurch gekennzeichnet, daß jedes Detektionselement (12) angeschlossen ist an eine Leseschaltung, verbunden durch eine Indiumlötstelle (20).

13. Vorrichtung nach einem der vorangehenden Ansprüche, dadurch gekennzeichnet, daß wenigstens die Leseschaltungen (14) die Synchrondetektionseinrichtungen (22) , die Verbindungseinrichtungen (21, 23), die Adressiereinrichtungen (19) und die Synchronisierungseinrichtungen (32) auf ein und demselben Substrat integriert sind.

**Claims**

1.  Photographic apparatus, comprising several optoelectronic detection means (10) arranged in matrix form with at least one row and several columns, each optoelectronic detection means (10) incorporating a detecting element (12) connected to a reading circuit (14); modulating means for modulating the optoelectronic detection (10) at a modulation frequency (fm); several synchronous detection means (22) at the modulation frequency (fm); connection means (21, 23) for connecting each optoelectronic detection means to a synchronous detection means (22); addressing means (15) for the optoelectronic detection means (10); and synchronization means (32) able to synchronize the synchronous detection, characterized in that it comprises modulating means for modulating the optoelectronic detection (10) at a modulating frequency (fm), several synchronous detection means (22) at the modulating frequency (fm) and in that the synchronizing means apply a synchronization signal to the detection means in order to modulate the detection and in that each synchronous detection means (22) incorporates an amplifier (24) providing a connection only transmitting time-variable signals, a selective filter (26) connected by an input to an output of the amplifier (24), the selective filter (26) having a centre frequency tuned on the modulation frequency (fm), a peak-to-peak detection circuit (28) connected by an input to an output of the selective filter (26) and an integrator (30) connected by an input to an output of the peak-to-peak detection circuit (28).

2.  Apparatus according to claim 1, characterized in that the detection means (10) of a column of the matrix are connected to the same synchronous detection means (22).

3.  Apparatus according to claim 1, characterized in that the selective filter (26) is of the N path filter type.

4.  Apparatus according to claim 1, characterized in that the peak-to-peak detection circuit (28) is a correlated double sampler.

5.  Apparatus according to any one of the claims 1 to 4, characterized in that it also comprises a multiplexer (34) connected to outputs of synchronous detection means (22).

6.  Apparatus according to claim 5, characterized in that the multiplexer (34) is integrated onto the substrate (18).

7.  Apparatus according to any one of the claims 1 to 6, characterized in that the modulation means incorporate a liquid crystal screen (42) connected to the synchronization means (32).

8.  Apparatus according to any one of the claims 1 to 7, characterized in that the detecting means (12) are photodiodes.

9.  Apparatus according to any one of the claims 1 to 6, characterized in that the modulation means are formed by a divider bridge formed by detection means (12) and an impedance element (Z).

10. Apparatus according to claim 9, characterized in that the detection means (12) are constituted by a photodetector element and the impedance element (Z) by a capacitor (Ca).

11. Apparatus according to claim 9, characterized in that the detection means (12) are constituted by a capacitor, whose capacitance varies as a function of the temperature and the impedance element (2) by a fixed capacitance capacitor (Ca).

12. Apparatus according to any one of the claims 1 to 11, characterized in that each detecting element (12) is connected to an associated reading circuit by an indium weld (20).

13. Apparatus according to any one of the preceding claims, characterized in that at least the reading circuits (14), the synchronous detection means (22), the connection means (21, 23), the addressing means (19) and the synchronization means (32) are integrated onto the same substrate.

FIG. 1

FIG. 5

FIG. 3

FIG. 2

FIG. 4

FIG. 6

FIG. 8

FIG. 9

FIG. 7 A

FIG. 7 B

FIG. 7 C

FIG. 7 D